# EUROPEAN PATENT APPLICATION

(11) **EP 1 229 480 A1**
(43) Date of publication of application: **07.08.2002**
(21) Application number: 02250632.3
(22) Date of filing: 30.01.2002
(51) Int. Cl.: G06F 17/60

(54) **Push model internet bill presentment and payment system**

(30) Priority: 31.01.2001 US 774863
(71) Applicant: Metavante Corporation, Milwaukee, Wisconsin 53223-9004 (US)
(72) Inventor: Olsen, Karl R, Plano, TX 75093 (US)
(74) Representative: Roberts, Gwilym Vaughan

(57) **Abstract**

A system and method for Internet bill presentment and payment using a "push" model to intelligently "push" bills from the billing entities (110) to the customers (70) without the active enrolment by the customer. Initially, a bill servicing entity data mines payments made by the customers (70) to that billing entity. The data mining reveals the financial institution (50) that a customer (70) uses to pay his bills and the customer's account number at that customer's financial institution (50). After determining the particular financial institutions (50) used by the customers, the bill servicing entity is able to send electronic bill packets (152) to the customers' respective financial institutions. By enlisting a plurality of financial institutions used by a plurality of billing entities, most of the customers' bills can be presented to the customers at the customers' financial institution with no effort by the customer. After presentment of the bills to the customers, the system will accept payment and provide for settlement of the payment.

## Description

-- The present invention relates generally to the field of network-based services and, more particularly, to an Internet bill presentment and payment system and method that provides a "push" methodology to present bills in one convenient location for electronic payment with little or no action required by the customers.

Americans spend an average of two hours per month paying the eighteen billion bills a year that are sent to them. In the process of paying these bills, Americans spend more than six billion dollars in postage. Annually, American businesses send or receive some twenty-six billion bills or payments at a cost exceeding seventeen billion dollars. The potential benefits of electronic bill payment for cost reduction and revenue production to all participants, billers, consumers, banks, and service providers, is one of the largest opportunities in the financial industry. In view of this enormous potential, the market for Internet bill payment is expected to rapidly expand in the near future.

Yet, the electronic bill payment industry is currently developing at a remarkable slow rate. Especially, banks have been criticized for not aggressively developing and promoting electronic bill payment services. After all, both billers and consumers are their customers. Additionally, surveys indicate that both of these sectors, billers and consumers, would prefer to have their trusted financial institution provide this service. However, outsourcing this service represent a high cost, and investing in a "loss leader" to develop and support this technology in-house presents a negative rate of return on an investment in the near term.

The lackluster earnings of the current service providers is a primary reason for the slow growth of the electronic bill payment industry. Additionally, billers cannot reach enough consumers to justify the cost of offering online bill presentment. Consequently, a significant number of consumers are not able to view and pay their bills online. At present, no practical solution exists to this chicken and egg scenario that plagues the industry.

Currently, three primary electronic bill payment models are in use. However, all of these business models present significant obstacles for efficient bill payment. Furthermore, each of these models requires the enrollment by the consumer to "pull" the bills from the billers.

The first electronic bill payment form is the Direct Model. In the Direct Model, the biller establishes a web site for the customer to view and pay the bill directly to the biller. The most obvious problem with this model is the requirement for the consumers to navigate many different web sites each month to pay the bills.

The second presentment and payment form is the Service Consolidator Model. In this model, a third party processor signs up billers and receives the bills to present to the customers. In this model, a customer has to only visit a single web site to pay all the bills. However, each service consolidator would need to have an agreement with every biller of each customer. Furthermore, a biller would need to send bills to multiple service consolidators. Therefore, it is extremely unlikely that that a majority of the bills will be presented.

The last form is the Customer Consolidation model. In this model, electronic bills are delivered directly to the customer. This model requires customers to enroll in a presentment system with each of their billers, and each biller's presentment system will be different. Additionally, security is significant problem in this type of email based system. Encrypting email requires the consumer to obtain specialized software. Even encrypted email poses significantly higher security risks versus other systems. Furthermore, in today's market, customers change Internet Service Providers (ISPs) frequently based on the price and quality of the service. Thus, the customer would be required to notify every biller each time the customer changes to a new ISP. Security plus the additional burdens placed on the consumer make these systems problematic.

Proprietary networks are being considered to address some of the security issues related to electronic banking. However, proprietary networks raise significant concerns related to operating costs, availability, and capacity.

Thus, a need exists for an improved Internet bill presentment and payment system. The system needs to be able to securely present bills and accept payments from a large percentage of customers with minimal effort of the part of the consumer. A system that "pushes" bills from the billers to the consumers without active enrollment by the consumer is needed to achieve the customer base required to effectively enable electronic bill payment on a significant scale. Such a system would enable billers to cost effectively participate in electronic bill presentment and payment. Preferably, banks would administer such a system because of the trust the public bestows in their financial institution to properly and securely handle financial matters. This improved system would finally unleash the economic potential of electronic bill presentment and payment.

### SUMMARY OF THE INVENTION

The present invention meets the needs described above in a "push" model network bill presentment and payment system. The system "pushes" bills from the billing entities to the customers without the active enrollment by the customer. By enrolling financial institutions, the invention allows for most, if not all, of the customer's bills to be consolidated in one location with no effort on part of the customer. Fortuitously, this location will be associated with the customer's trusted financial institution. Thus, this invention 's "push" system will enable a critical mass of customers to participate in a network bill payment system so that the potential of electronic bill payment can be finally realized.

The system can utilize information already in possession of the participants to enable the presentation for payment of most, if not all, of customers' bills. In order to determine the customer's financial institution, payments made by the customer can be data mined. Naturally, any non-cash payment will identify the financial institution the payment is drawn upon and the customer account number at the particular financial institution. Once the customer's financial institution information has been determined, the system can associate a network address with an electronic depository associated with the customer's financial institution and electronically send bill packets to that address. Thus, the present invention enables the utilization of data already available to enable the presentment of customer's bills at the customer's financial institution. Furthermore, the invention provides the customers the comfort of knowing that their trusted financial institution will be the entity providing the bill presentment and payment service.

Additionally, the system can be configured to automatically debit a customer's account to pay a bill and electronically deposit the funds directly into the billing entity's billing account. The data mining can extract from a payment the customer account identification information that the customer's financial institution can use to debit the customer's account. This customer account identification information can be attached to an electronic bill to create a bill packet. The bill packet also contains information about the billing entity's financial institution and the billing entity's billing account maintained at the biller's financial institution. The billing entity account information will allow the customer's financial institution to electronically transmit the payment across a network. Therefore, upon payment authorization, the customer's financial institution can electronically debit an account to pay a bill and electronically transmit the payment for direct deposit into the billing entity's billing account.

Additionally, after the customer gains confidence in the presentment and payment system, the customer can be asked to discontinue receiving a paper bill which would save the billing entity a significant amount of money. Furthermore, the invention does not require creating an expensive proprietary network. The invention can utilize existing proprietary networks or the Internet to transfer data. The use of these current networks enables the bill presentment and payment system to provide reliable service extremely cost effectively.

In summation, the present invention can reliably consolidate the customer bills in one trusted and convenient location for electronic bill payment with little or no effort required by the customer. Thus, the invention will enable a great number of customers to partake in electronic bill payment. This concentration of customers will allow billing entities to reach enough customers to make electronic bill payment cost effective and highly desirable.

Generally described, the invention is a method for electronic bill presentation and payment. The billing entity creates a file that includes the billing invoices representing a financial obligation owed by a corresponding customer to that billing entity. Each billing invoice account is a record in the bill file. The bill file also contains information identifying the biller's financial institution and a particular billing account maintained at a biller's financial institution.

The bill servicing entity, which may be the billing entity itself or a bill service provider, will receive the bill file and process the records to create bill packets. The bill servicing entity creates a bill packet by attaching customer's account identification information to information included in the bill record. The customer account identification information enables the customer's financial institution to sort the bill packets and determine the particular customer. Optionally, a Universal Resource Locator of a server operated by the billing entity can be attached to the bill record. The URL can be used to facilitate the customer finding detailed billing information about the bill.

In order to be able to send a bill packet, the bill servicing entity will need to obtain a routing address associated with a customer's financial institution. Using the routing address, the bill servicing entity transmits the bill packet to an electronic repository corresponding to the customer's financial institution. Obviously, the bill packet can be encrypted prior to being transmitted.

The electronic repository processes each of the bill packets received for presentation to the customer. The electronic repository can decrypt the bill packet if the bill packet is encrypted. As expected, the electronic repository will sort the received bill packets by utilizing the customer's account information and assemble a bill presentation file containing information from the received bill packet. Finally, the bill presentation file will be electronically presented for viewing and bill payment.

One method of obtaining the customer's financial institution would be to data mine a payment paid to the billing entity by the customer. Non-cash payments contain the customer's financial institution data that will distinctly identify the customer's financial institution. For example, a check could be data mined to obtain the customer's financial institution American Bankers Association routing and transit number. Obviously, the routing and transit number distinctly identifies the customer's financial institution. Likewise, a credit card payment record could be mined obtain the International Organization for Standardization issuer identification number. Those skilled in the art will recognize that a wide range of information can be used to distinctly identify the financial institution used by the customer to pay the billing entity.

Data mining a payment can also be used to obtain the customer's account identification information. A credit card number, a bank account number, or even a customer's name could be used by the customer's financial institution to identify the customer in order to sort the bill packets and present for viewing the bill presentation file. Those skilled in the art will recognize that a wide spectrum of information can be used for the customer's account identification information.

Once the customer's financial institution is determined, a routing address is required to transmit a bill packet to an electronic repository associated with the customer's financial institution. One method of obtaining a routing number would be to register the customer's financial institution data with an Internet Domain Name Service. Another method would be to associate the customer's financial institution with a globally unique identifier and register the globally unique identifier with an Internet Domain Name Service. Naturally, a routing look-up table database can be created to associate the routing address with the customer's financial institution. Clearly, a routing address does not have to be an Internet address. Those skilled in the art will recognize that numerous methods exist for associating the customer's financial institution with a routing address.

After receiving the bill packet and creating the bill presentation file, the electronic repository presents each bill presentation file for viewing and payment by the customer. One method of payment includes receiving authorization to debit a direct deposit account at the customer's financial institution. Additionally, a credit card of the customer can be charged. Those skilled in the arts will recognize a range of payment methods can be used an electronic bill payment system. Naturally, a payment can be recorded in a payment warehouse database. Furthermore, security for accessing the bill presentation file to ensure the privacy of any information displayed can be implemented. Additionally, security to ensure the confidentiality of any payment information received can be implemented as well.

After receiving the payment, the electronic repository associated with the customer's financial institution electronically transmits the payment to biller's financial institution and notifies the bill servicing entity of the payment. Optionally, the payment can be recorded in a bill service provider's payment warehouse database.

Embodiments of the invention will now be described, by way of example, with reference to the drawings of which:
Fig. 1 is a functional block diagram illustrating a bill presentment and payment system;
Fig. 2 is a functional block diagram illustrating of an Internet customer bill presentment system;
Fig. 3 is a functional block diagram illustrating a customer payment system;
Fig. 4 is a functional block diagram illustrating an electronic funds transfer system;
Fig. 5 is a functional block diagram illustrating a bill service provider data mining system;
Fig. 6 is a logic flow diagram illustrating an Internet bill present and payment routine;
Fig. 7 is a logic flow diagram illustrating an initial setup of the bill service providers and customer financial institutions routine;
Fig. 8a is a logic flow diagram illustrating a setup a routing look-up table database routine;
Fig. 8b illustrates a routing look-up table corresponding to the logic flow diagram illustrated in 8a;
Fig. 9 is a logic flow diagram illustrating a customer financial institution setup routine;
Fig. 10 is a logic flow diagram illustrating a bill processing by the bill service provider routine;
Fig. 11 is a logic flow diagram illustrating a bill presentment routine; and
Fig. 12 is a logic flow diagram illustrating a settlement of an electronic bill payment routine.

The system is designed to provide intelligent routing of the customer bills from a bill service provider, an agent of the billing entity that provides electronic bill payment services for the billing entity, to the customers' financial institutions for presentment and payment. Typically, the bill service provider is the biller's financial institution. Naturally, the billing entity, if it so desired, can perform the functions of the bill service provider. The system manager will enlist bill service providers and customer financial institutions to participate in the bill presentment and payment system.

Initially, a bill service provider data mines payments made by the customers paid to that billing entity. If the bill service provider is the biller's financial institution, the bill service provider will receive the customer payments in the course of the normal business operation. In standard practice, the billing entity deposits the payments made by the customer into the billing entity's billing account maintained at the biller's financial institution. The payments can be data mined to obtain information that distinctly identifies the financial institution that a customer uses to pay his bills and the customer's account number at that customer's financial institution. If the bill service provider is not the biller's financial institution, the bill service provider will need to be provided with payment information to obtain the customer's financial institution and the associated customer's account number. For example, a check will yield the customer's financial institution's American Banker Association routing and transit number. Additionally, a check will also provide the customer's account at the customer's financial institution. If the customer paid by credit card, the data mining can obtain the financial institution issuer identification number and the customer's number. Either the routing and transit number or the issuer identification number will distinctly identify the customer's financial institution. A customer database can be created the bill service provider to correlate the customer with the customer's financial institution and the associated account identification information.

In order to electronically send a bill packet to the customer's financial institution, the bill service provider will need to determine the customer financial institution's network address. A network address can be obtained by registering the information that distinctly identifies the customer's financial institution with a Domain Name Service. However, anyone familiar with this system of registration could easily determine the network address containing sensitive financial information. Therefore, a globally unique identifier can be associated with the distinct identification information. This globally unique identifier can be registered to obtain the customer's financial institution's network address. A look-up table can be created to correlate the customer's financial institution with the corresponding network address.

After determining the network address, the bill service provider can send electronic bill packets to the customer's financial institution. In order to send a bill packet to the customer financial institution, the bill service provider needs to receive a bill file from the billing entity. A bill file contains a plurality of records identifying the financial obligations owed by customers to the billing entity. The bill service provider sorts the bill file by individual customers. The bill service provider attaches additional information to the record to create a bill packet.

Generally, the bill service provider attaches the biller's financial institution routing and transit number and the associated billing account number to the customer's record. This attached information enables the customer financial institution to electronically transmit the payment directly to the biller's financial institution. Additionally, customer account identification information is attached to the record. This customer account identification information enables the customer financial institution to determine the appropriate customer associated with that bill packet. Typically, the billing entity's URL where detailed billing information can be found is also included in the bill packet.

After creating the bill packet, the bill service provider encrypts the bill packet and transmits the packet to network address of the customer's financial institution found in the look-up table. The customer financial institution decrypts the packet and determines from the included information which customer the record applies.

The customer financial institution usually will load the information included in the bill packet into a customer database. A bill presentation file is created and typically uploaded to a payment web server. The information contained in the bill presentation file is formatted per customer specifications. Most customers will desire the bills to be presented in a certain order. A link to the billing entity's detailed billing information can be provided if an appropriate URL was attached to the bill packet. After presenting the bill, the customer financial institution will accept payment. Typically, the payment will include authorization to debit a direct deposit account at the customer financial institution or charge a credit card. If the payment will result in an overdrawn account or exceed the credit limit, the customer financial institution can instantly notify the customer.

After receiving the payment, the customer financial institution will transmit the payment to the biller's financial institution. The customer financial institution will record the payment in a customer payment warehouse database in case of future questions arise regarding the payment. The payment can be sent over any network used by financial institutions for this purpose such as the AUTOMATED CLEARING HOUSE (ACH) network or via SPECTRUM. The biller's financial institution will directly credit the billing entity's billing account. If the bill service provider is not the biller's financial institution, the customer financial institution will also notify the bill service provider of the payment. The bill service provider will inform the billing entity of the payment. Additionally, the bill service provider will record the payment in a bill payment warehouse database in case future questions arise concerning the payment.

By enlisting a plurality of financial institutions used by a plurality of billing entities, most of the customers' bills can be presented to the customers at the customers' financial institution with no effort by the customer. After presentment of the bills to the customers, the system accepts payment and provide for settlement of the payment.

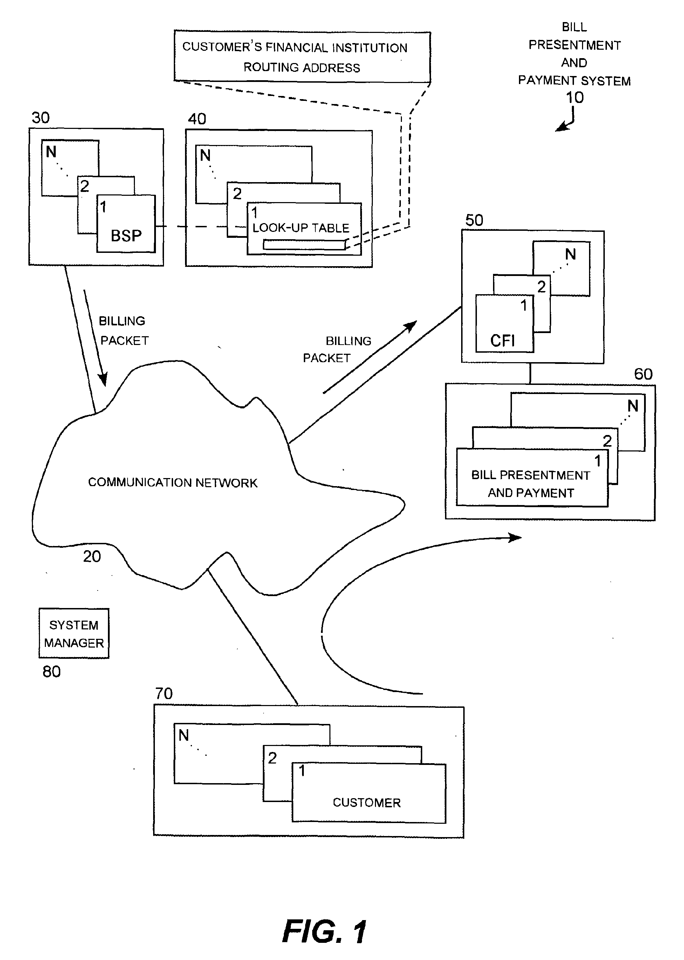

Turning to the figures, in which like numerals indicate like elements throughout the several figures, FIG. 1 is a functional block diagram of a bill presentment and payment system **10.** A system manager **80** initially enrolls the bill service providers and customer financial institutions into the system. The system manager **80** also oversees the system **10.** The management function of the system manager includes administration of the domain name registration of the participants and maintenance of the participant directory. Additionally, the system manger establishes message formats for bill and payment notice interchange, certifies and audits message format, protocol, and security compliance by member financial institutions and billing entities, and establishes member and message security infrastructure. Of course, the system manager also administers the member billing and resolves disputes between members.

A bill service provider **30,** typically the biller's financial institution, receives an electronic bill file from a billing entity. The bill service provider **30** processes the electronic bill file to create a bill packet for each of the billing entity's customers **70.** After creating the bill packets, the bill service provider **30** determines the routing address of the customer's financial institution **50.** A look-up table database **40** can be used to correlate the customer's financial institution **50** with the corresponding routing address. After determining the customer's financial institution routing address, the bill packet is sent via a network **20** to the routing address. The customer's financial institution **50** sorts the bill packets and creates a bill presentation file for each customer **70.** The bill presentation file contains the information from the bill packet that will be displayed to the customer **70.** Typically, the bill presentation file is uploaded to a payment server **60** for presentment and payment by the customer **70.**

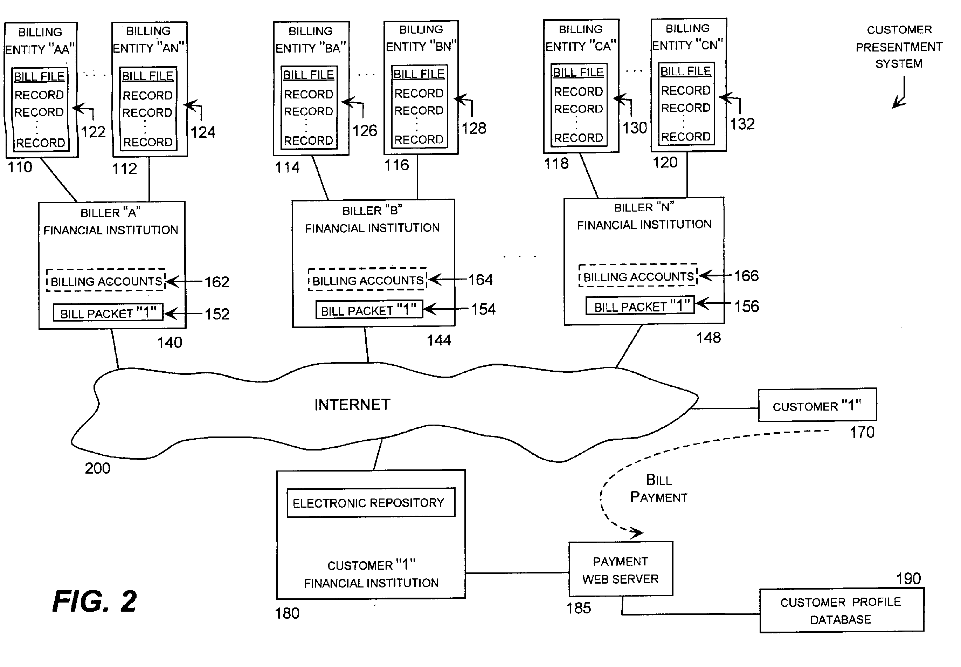

FIG. 2 illustrates a typical Internet bill presentment system. Billing entity "AA" **110** creates a bill file **122** containing the billing records of each of its customers. Each record identifies a particular invoice account and a corresponding balance representing a financial obligation owed by a corresponding customer to the billing entity. Additionally, the bill file **122** contains information regarding the billing entity "AA" billing account **162** maintained at the biller financial institution "A" **140** to enable automated payment of the customers' bills. Next, the billing entity "AA" **110** sends its bill file **122** to its financial institution, biller financial institution "A" **140.** Likewise, all of the billing entities that bank at biller financial institution "A" **140,** including billing entity "AN" **124,** send their respective bill files to biller financial institution "A" **140.**

Biller financial institution "A" **140** processes the records contained in the bill files. Each record is sorted by customer, and a bill packet is assembled for that customer. Bill packet "1" **152** is assembled for customer "1" **170.** A bill packet includes information from the corresponding bill record and the customer's account identification information. The customer's account identification information can be any information that distinctly identifies the customer at the customer's financial institution. Typically, the customer's account identification information will be the customer's direct deposit account number at the customer's financial institution or the customer's credit card number with the customer's financial institution. Additionally, the billing financial institution can attach to a bill packet the billing entity's URL to enable the customer to easily obtain detailed billing information. Each biller financial institution, up to and including biller financial institution "N" **148,** receives bill files from their particular billing entities and assembles bill packets.

The bill packets are encrypted and sent via the Internet **200** to electronic repositories associated with the customers' respective financial institutions. Bill packet "1" **152** for bill financial institution "A" **140** is sent to the electronic repository at customer financial institution "1" **180.** Likewise, all biller financial institutions, up to and including bill financial institution "N" **148,** send their bill packets for customer "1" **170** to an electronic repository associated with customer financial institution "1" **180.** Thus, most if not all of the bills for customer "1" **170** are sent to one location for presentment and payment.

The electronic repository decrypts the bill packets, sorts by customer, and assembles a bill presentation file for each customer. The bill presentation file includes information from the bill packet that will be displayed to the customer. Typically, the bill presentation file is uploaded to a payment web server **185.** The information contained in the bill presentation file can be configured per information contained in a customer profile database **190.** For example, the customer may desire to have his credit card bills displayed first, followed by utility statements, the monthly car note next, and a daughter's credit card that the he pays last. Additionally, the system can be configured to sum the payments made during that sitting and present a total amount paid during the month.

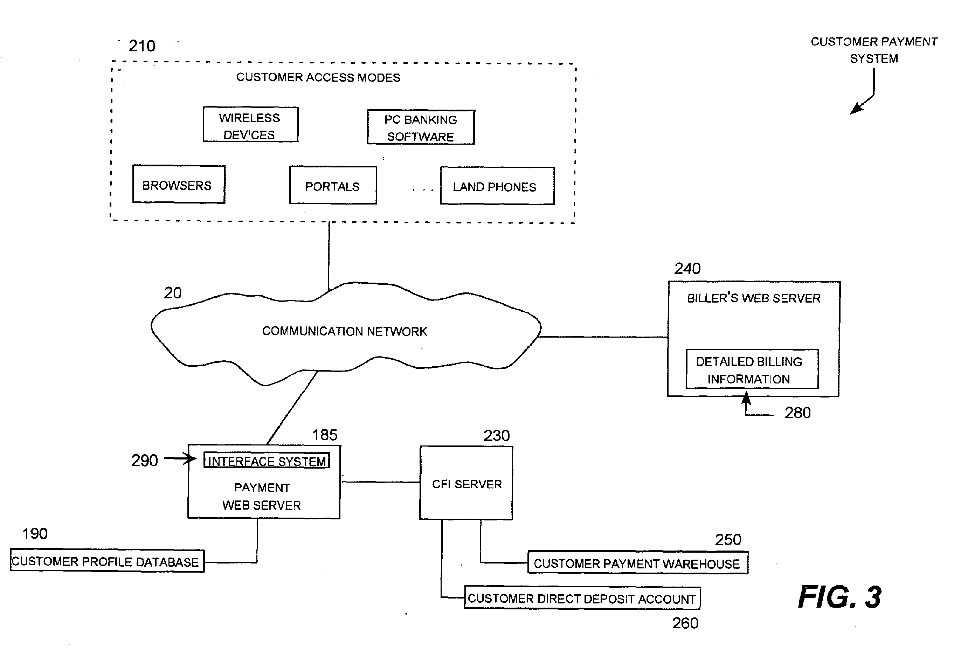

FIG. 3 is an illustration of customer payment system. The customers can access the customer's financial institution payment system through an interface system **290.** The interface system **290** can be configured to allow various customer access modes **210.** A customer may use a browser to view the information contained in their bill presentation file. Likewise, the interface system **290** can allow viewing by the customer's PC banking software or by the customer's portal. Additionally, the customer may desire to assess the information by a land phone or by wireless devices. Naturally, the interface system **290** can be accessed locally by a customer service representative or enabled to provide automated responses to touch tone input. As previously discussed, the payment web server **185** can display the information according to customer customer's specification stored in the customer profile database **190.** However, a customer my desire to view more detailed billing information prior to paying his bill. A URL may have been provided with the bill packet. In this case, the payment server **185** can provide a link to the biller's web server **240** which can send the customer to the detailed billing information **280.**

Naturally, the payment system will accept payments by the customer. Typically, the customer can authorize the customer's financial institution to debit the customer's direct deposit account **260.** Additionally, the system may accept credit cards or other forms of payment. After accepting payment, the customer financial institution server **230** may record the payment in the customer payment warehouse database **250.** The customer financial institution payment warehouse database **250** can be used by customer service representatives in case future problems regarding the payments arise.

Generally, servers can be made more secure than email over the Internet. Security can be provided to ensure that any customer's information displayed is restricted to the particular customer. Additionally, security can be provided to ensure the privacy of any data inputted to the payment system by the customer. Security technology is well known by those skilled in the art.

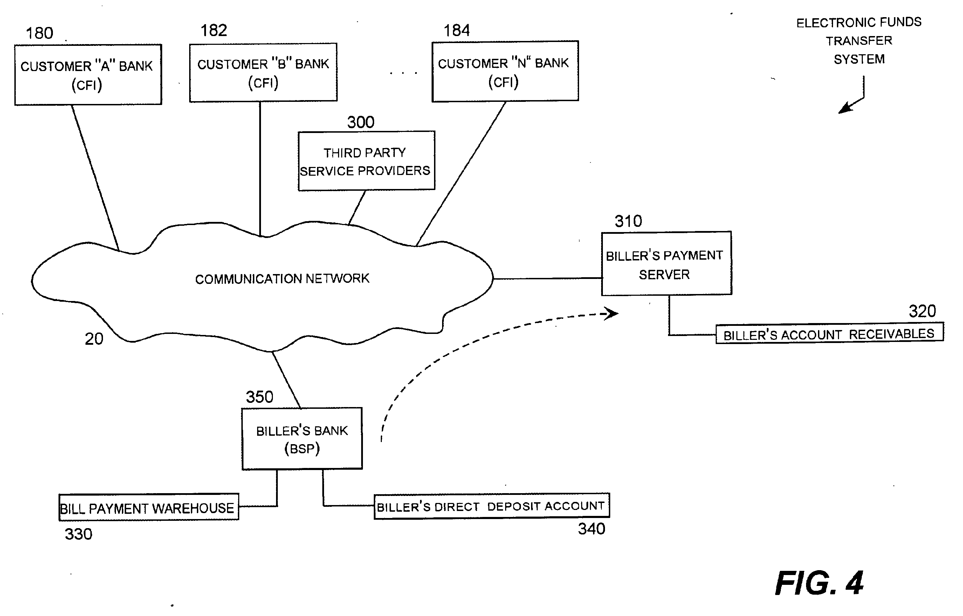

FIG. 4 is an illustration of an electronic funds transfer system. Customer financial institutions send payments to the biller's financial institution **350** where the billing entity maintains a billing account. For example, customer bank "A"**180** sends all of the automated payments for a billing entity to the billing entity's bank, biller's bank **350.** Likewise, all of the participating financial institutions, up to and including customer bank "N" **184,** send all of the automated payments for a billing entity to the biller's bank **350.** Additionally, the Internet bill presentment and payment system can be configured to accept electronic payments from third party service providers **300** such as CHECKFREE. The electronic payment may be sent via proprietary networks such as the SPECTRUM switch that was developed by several large banks. Naturally, the payment may be sent via the Internet. The Open Financial Exchange (OFX) and the Interactive Financial Exchange (IFX) are two current Internet standards for the exchange of financial data. Those skilled in the art will appreciate that a range of methods exists for the electronic sending of data to a financial institution.

After receiving the automated payment, the biller's financial institution **350** credits the billing entity's direct deposit account **340** and informs the billing entity of the receipt of payment. The biller's financial institution **350** may record the payment in a bill payment warehouse database **330** for customer service and other purposes. Naturally, the billing entity updates the account receivable **320** to complete the cycle.

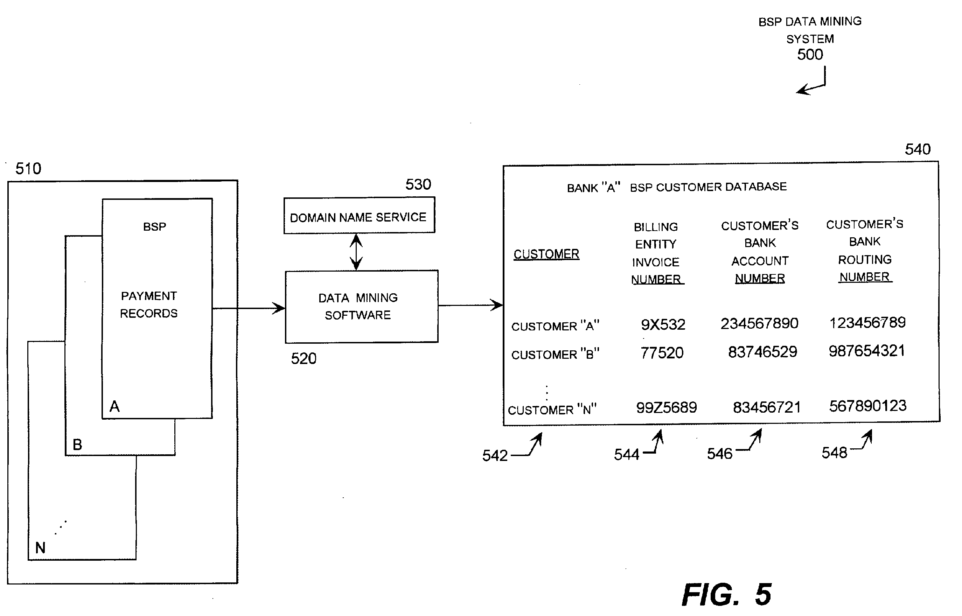

FIG. 5 is an illustration of a bill service provider data mining system. Billing entities provides previous payments **510** by its customers to the bill service provider. Payments **510** will identify the customer's financial institution that the customer used to pay the billing entity and the customer's account number at that financial institution. If the bill service provider is the billing entity's financial institution, the biller's financial institution will receive the payments **510** in the course of normal business. For example, a biller's bank, during the course of its routine operations, will receive customer checks used to pay the billing entity. Otherwise, a billing entity may provide customer payments or payment records specifically for the data mining operation. The bill service provider can easily identify the customer's financial institution and the customer account number at the customer financial institution by data mining the payments.

Typically, the bill service provider will save the data mined information in a bill service provider's customer database. Thus, the database can correlate the customer with the corresponding customer's financial institution and the customer's account at that financial institution. Additionally, the billing invoice number used by the billing entity may be obtained by the data mining and recorded. For example, database **540** represents a typical bill service provider customer database for one billing entity. The customer database **540** contains a column **542** identifying the billing entity's customers. The associated billing invoice number used by the billing entity for each customer is illustrated by column **544.** Column **546** represents the customer's bank account number, and column **548** represents the customer's bank American Banker Association routing and transit number printed on the customer's check. If the bill service provider is not the biller's financial institution, the customer database typically would also identify the biller's financial institution and the billing account number the billing entity maintains at the biller's financial institution.

The information obtained that distinctly identifies the customer's financial institution can be registered with a Domain Name Service (DNS). The registration will provide an IP address for the customer's financial institution. For example, a routing and transit number could be registered and an associated IP address could be obtained. Thus, knowing the customer's bank routing and transit number would enable a financial institution to transmit an electronic bill packet to the customer's financial institution IP address. However, for security and other reasons, the distinct identification information could be associated with a globally unique identifier (GUID), and the GUID could be registered with a DNS to obtain an IP address. The system manager **80** can create a look-up table database **40** that correlates the customer's financial institution, the customer's financial institution distinct identification information, and the associated GUID. This look-up table database **40** will enable a bill service provider to easily obtain the network address to send the bill packets.

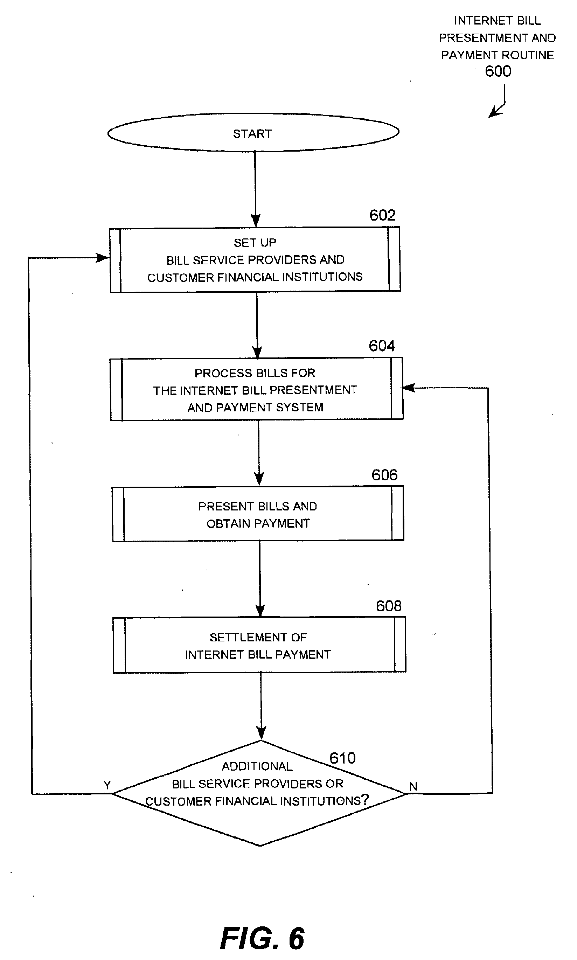

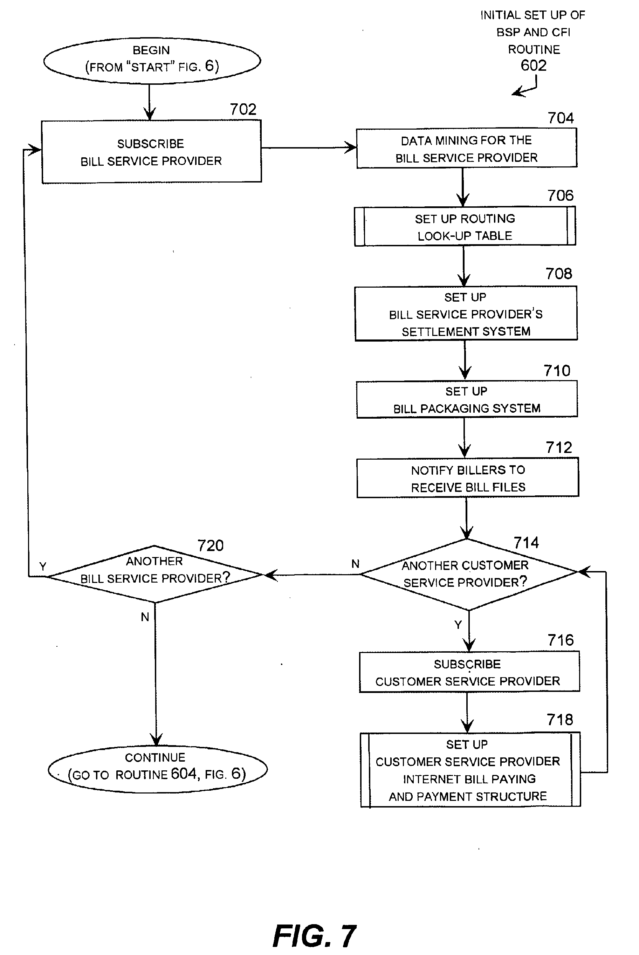

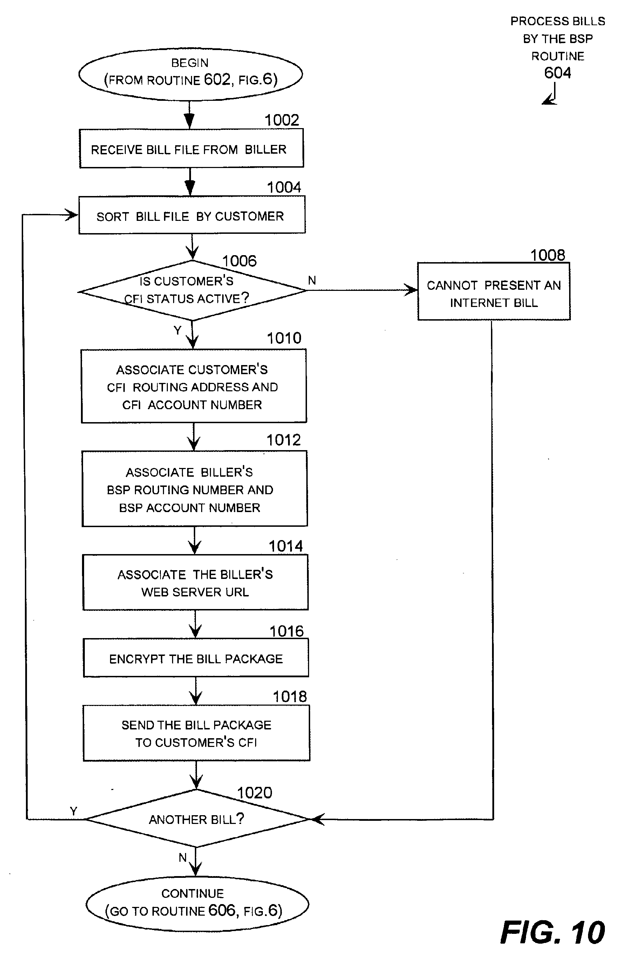

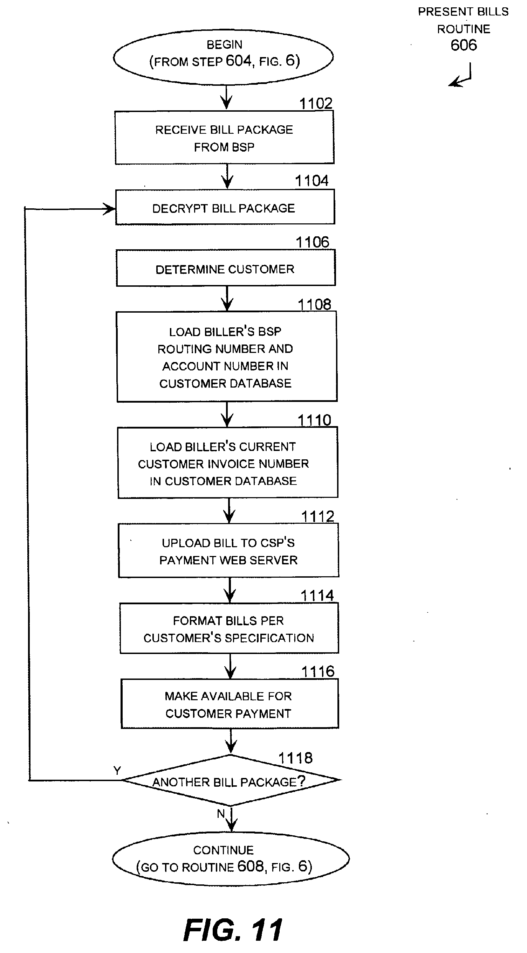

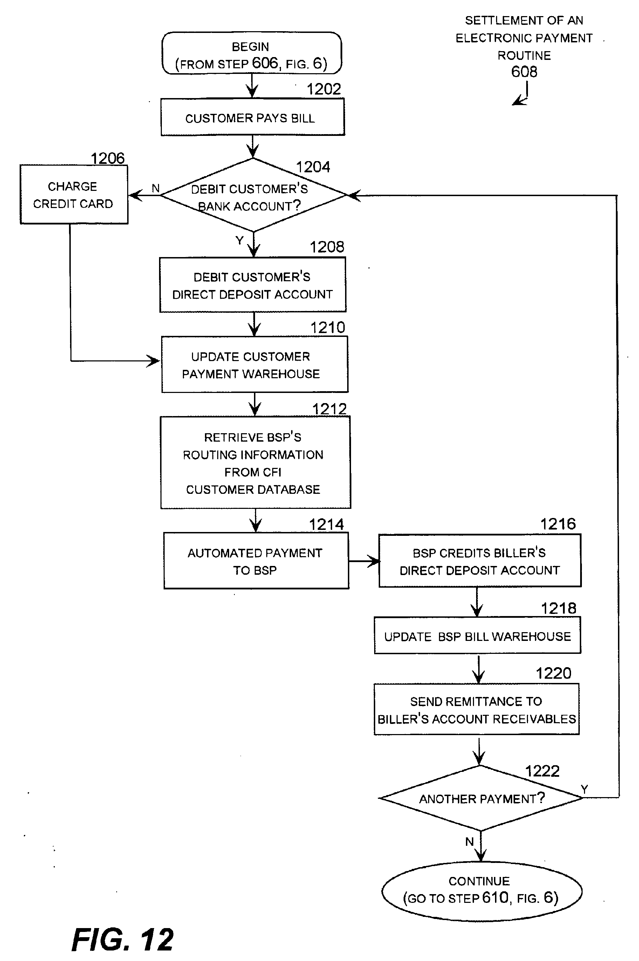

FIG. 6 is a logic flow diagram illustrating an Internet bill presentment and payment routine **600.** Routine **602** sets up the bill service providers and the customer financial institutions to enable an Internet bill presentment and payment system. Bill service providers, typically the billers' financial institution, are agents of the billing entity that provides electronic bill presentment and payment services for the billing entity. Routine **602** is described in greater detain in reference to FIG. 7. Routine **602** is followed by routine **604,** in which the bill files are processed by the bill service provider and bill packets are transmitted to the customer financial institutions. Routine **604** is described in greater detail in reference to FIG. 10. Routine **604** is followed by routine **606,** in which the electronic bills are presented to the customer and payment is received. Routine **606** is described in greater detail in reference to FIG. 11. Routine **606** is followed by routine **608,** in which the settlement of Internet bill activities are performed. Routine **608** is described in greater detail in reference to FIG.12. Routine **608** is followed by step **610,** in which additional bill service providers or customer financial institutions are enrolled, if required. If additional institutions are to be enrolled, the "YES" branch is followed to routine **602.** If additional institutions are not to be enrolled, the "NO" branch is followed to routine **604.** Bills will be processed for Internet bill presentment and payment ad infinitum with additional bill service providers or customer financial institutions periodically entering the system.

FIG. 7 is a logic flow diagram illustrating an initial set up of bill service providers and customer financial institutions routine **602.** Routine **602** follows the "START' step shown on FIG. 6. In step **702,** the system manager **80** enrolls a bill service provider. Typically, the bill service provider will be a financial institution at which a plurality of billing entities maintains a bank account. Step **702** is followed by step **704,** in which the bill service provider performs data mining. Previous payments to a billing entity are data mined to extract information that distinctly identifies the financial institution used by the customer to the bill and the account number at the customer's financial institution. If the customer paid the billing entity by a check, the customer bank routing and transit number can be obtained to distinctly identify the customer's financial institution. Also, the check will contain the customer's bank account number. If the customer paid by credit card, the issuer's identification number and the account number of the customer can be obtained. The data mining will determine for each customer the financial institution and the associated account number used by that customer to pay that biller.

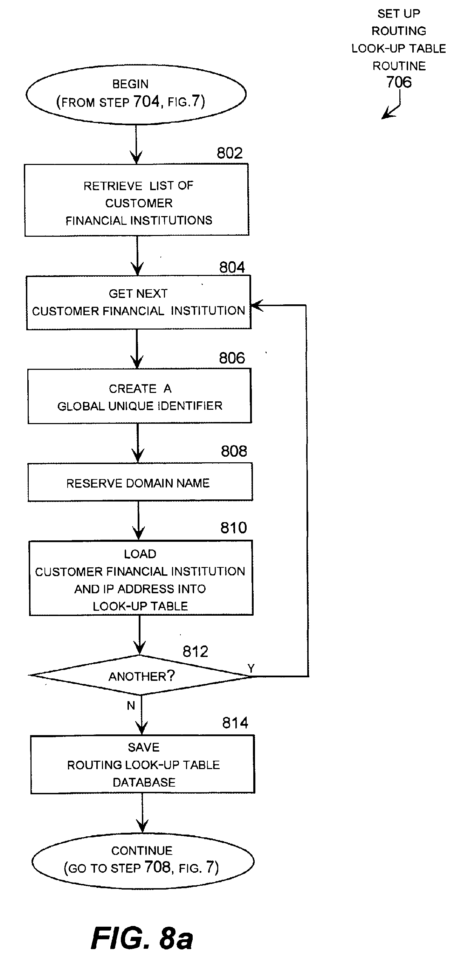

Step **704** is followed by routine **706,** in which the system set up a routing look-up table database. The look-up table database correlates the distinct customer financial institution identification information with the customer's financial institution network address. Routine **706** is described in greater detail in reference to FIG. 8a. Routine **706** is followed by step **708,** in which the bill service provider's settlement system is established. The bill service provider establishes a system to receive the electronic bill payments made by the customer financial institutions and inform the billing entity of the receipt of a payment. Additionally, the bill service provider creates a bill payment database to record the payments paid to the billing entities. Also, if the bill service provider is the biller's financial institution, a system is implemented to automatically credit the billing entity's direct deposit account upon the receipt of an automated payment.

Step **708** is followed by step **710,** in which the bill service provider sets up the bill packaging structure. The bill service provider establishes a means to receive the electronic bill file sent by the billing entities, process the bill file, and send the assembled bill packets to the customer's financial institution. The procedure of processing the bill files and sending the resultant bill packets is described in greater detail in reference to FIG. 10. Step **710** is followed by step **712,** in which the bill service provider notifies the billing entities it services that the service provider is ready to receive bill files to begin electronic bill presentment and payment.

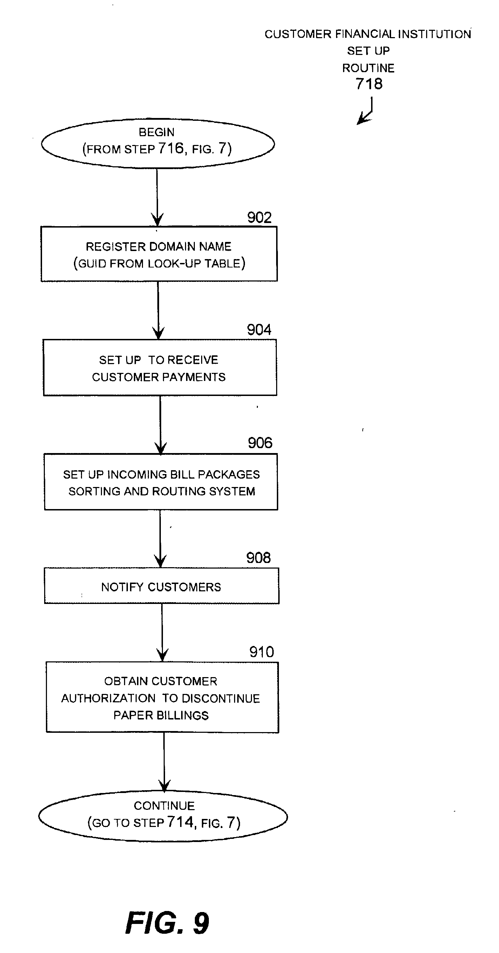

Step **712** is followed by step **714,** in which the bill service provider determines whether the data mining yielded another customer financial institution that needs to be enrolled into the system. If another customer financial institution is to be enrolled, the "YES" branch is followed to step **716,** in which the system manager **80** subscribes the customer financial institution. Step **716** is followed by routine **718,** in which the customer financial institution Internet bill presentment and payment structure is set up. Routine **718** is described in greater detail in reference to FIG. 9. Routine **718** is followed by step **714.**

If another customer financial institution is not to enrolled, the "NO" of step 714 is followed to step **720.** In step **720,** the system manager **80** determines whether another bill service provider is available to enroll into the system. If another bill service provider is be enrolled, the "YES" branch is followed to step **702.** If another bill service provider is currently not to be enrolled, the "NO" branch is followed to the "CONTINUE" step, in which the routine is returned to routine **604** of FIG. 6.

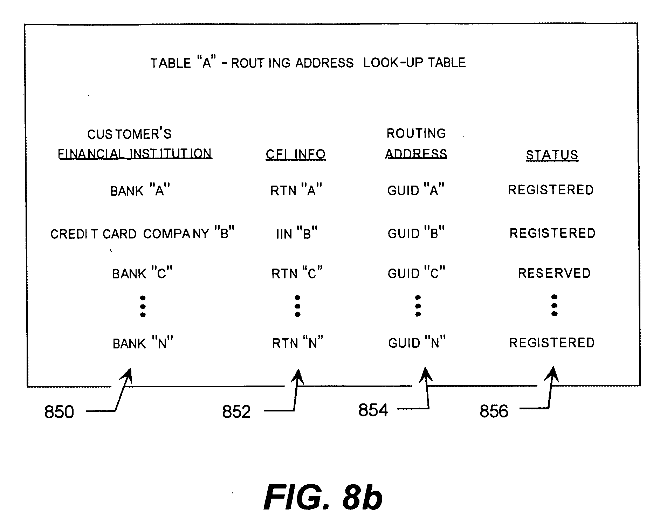

FIG. 8a is a logic flow diagram illustrating a set up of a routing look-up table routine. Routine **706** follows **704** step shown on FIG. 7. In step **802,** the bill service provider determines each customer's financial institution based on the distinct identification information obtained during the data mining. Step **802** is followed by step **804,** in which the bill service provider selects a customer financial institution. Step **804** is followed by step **806.** In step **806,** the bill service provider associates a globally unique identifier (GUID) with the distinct identification information that distinctly identifies the customer financial institution. Thus, the assigned GUID can now distinctly identify the customer financial institution. Step **806** is followed by step **808,** in which the bill service provider determines a network address for the customer financial institution. A network routing address can be obtained by registering the GUID with a Domain Name Service (DNS). Step **808** is followed by step **810,** in which the network routing address is loaded into a routing look-up table database corresponding to the example routing look-up table illustrated in FIG. 8b. Step **810** is followed by step **812,** in which the bill service provider determines if another customer financial institution needs a routing address. In order to send electronic bill packets to every customer, each customer financial institution needs a routing address. If a customer financial institution does not have an assigned routing address, the "YES" branch is followed to step **804.** If all customer financial institutions have an assigned routing address, the "NO" branch is followed to step **814.** In step **814,** the bill service provider saves the routing look-up table for future reference. Step **812** is followed by "CONTINUE" step, in which the routine is returned to step **708** of FIG. 7.

FIG. 8b illustrates a routing look-up table database. The look-up table correlates the customer financial institutions with the corresponding routing addresses. Table "A" includes a column **850** that lists the various customer financial institutions. The corresponding distinct identification information is contained in column **852.** Typically, the distinct identification information includes the ABA routing and transit number or the ISO issuer identification number. For security and other reasons, a GUID will generally be associated with distinct identification number. The GUID corresponding to the particular customer financial institution is shown in column **854.** If the customer financial institution is participating in the system, the GUID can be registered with a Domain Name Service to receive an IP address. If the customer financial institution is currently not participating in the system, the corresponding GUID can be reserved with the DNS until the customer financial institution is enrolled in the system. Thus, the status column **856** can be used to determine if the customer financial institution has been enrolled into the system.

FIG. 9 illustrates a customer financial institution set up routine **718.** Routine **718** follows step **716** shown on FIG. 7. In step **902,** the customer financial institution obtains a network routing address. Typically, the routing address is obtained by registering the GUID previously associated with customer financial institution. The customer financial institution registers the GUID with a domain name service and receives an IP address. Step **902** follows step **904,** in which the customer financial institution establishes a means to present the electronic bills and receive customer payments. Step **904** is followed by step **906,** in which the customer financial institution establishes a means to receive, sort, and process incoming bill packets. Additionally, the customer financial institution creates a system that can send automated payments to the bill service providers upon receipt of payments from the customers. Step **906** is followed by step **0908,** in which the customers are notified that they are able to pay their bills electronically. The notification can be included in a monthly statement to the customers. Step **908** is followed by step **910,** in which the customer financial institution requests the customer to discontinue paper billings for the billing entities utilizing this system. The permission to discontinue the sending of a paper bill can be obtained at any time, especially after the customer gains confidence in the bill presentment and payment system. Step **910** is followed by the "CONTINUE" step, in which the routine returns to step **714** of FIG. 7.

FIG. 10 illustrates a processing bills by the bill service provider routine **604.** Routine **604** follows routine **602** shown on FIG. 6. In step **1002,** the bill service provider receives a bill file from the billing entity. A bill file contains the customers' electronic bill records. Each record contains a statement of the obligation owed by a customer to the billing entity. Step **1002** is followed by step **1004,** in which the bill service provider parses the bill file into records and sorts the records by customer. Step **1004** is followed by step **1006,** in which the bill service provider determines if the customer's financial institution is an active participant in the system. The look-up table contains information on the participation status of the customer financial institutions. If the customer financial institution is not currently participating in the system, the "NO" branch is followed to step **1008.** In step **1008,** the bill service provider determines that the bill record cannot be presented for electronic bill payment. The bill service provider can try to enroll the customer financial institution into the system. Step **1008** is followed by step **1020,** in which the bill service provider determines if another bill record is available for processing.

If the customer financial institution is participating in the system, the "YES" branch of step **1006** is followed to step **1010.** In step **1010,** the bill service provider associates the customer financial institution with the customer record. Additionally, the customer financial institution attaches to the bill record the customer's account number at the customer financial institution. Step **1010** is followed by step **1012,** in which the customer financial institution attaches the billing entity' financial institution routing number and the billing account number. The routing number and billing account number enable the customer financial institution to send an automated payment to the billing entity's financial institution. Step **1012** is followed by step **1014,** in which the bill service provider attaches to the bill record the biller's web server URL. The customer financial institution use the biller's URL to provide a link to the detailed billing information the biller's web server. Step **1014** is followed by step **1016,** in which the customer financial institution encrypts the bill packet. Step **1016** is followed by step **1018,** in which the bill service provider transmits the bill packet to the customer financial institution. The network address of the customer financial institution can be obtained from the routing look-up table database **40.** Step **1018** is followed by step **1020,** in which the bill service provider determines if another bill record needs to be processed. If another bill record will be processed, the "YES" branch is followed to step **1004.** If another bill record will not be processed, the "NO" branch is followed to the "CONTINUE" step, in which the routine is returned to routine 606 of FIG. 6.

FIG. 11 illustrates a bill presentment routine **606.** Routine **606** follows routine **604** shown on FIG. 6. In step **1102,** customer financial institution receives a bill packet from the bill service provider. Step **1102** is followed by step **1104,** in which the customer financial institution decrypts the bill packet. Step **1104** is followed by step **1106,** in which the customer financial institution determines the customer. The customer financial institution can utilize the customer account number included in the bill packet to determine the particular customer. Step **1106** is followed by step **1108,** in which the customer financial institution loads information contained in the bill packet into a customer database. Typically, the customer database will include the biller's financial institution routing number and associated billing account number. This information enables the customer financial institution to send an automated payment to the biller's financial institution. Step **1108** is followed by step **1110,** in which the customer financial institution loads into the customer database additional information. This additional information includes the biller's current customer invoice number.

Step **1110** is followed by step **1112,** in which the customer financial institution creates the bill presentation file. Typically, the bill presentation file includes only information required by the customer to pay the bill. This bill present file is uploaded to the presentment server. Generally, the customer financial institution will have a server configured to receive the bill packets and another server for customer presentment. Step **1112** is followed by step **1114,** in which the customer financial institution formats the information in the bill presentment file according to customer specifications. For example, the customer may desire to have the bills displayed in order of the payment due dates or listed in decreasing dollar amounts due on the bills. Naturally, a myriad of different display options can be constructed. Step **1114** is followed by step **1116,** in which the customer financial institution presents the bill for viewing and payment by the customer. Security to ensure that only the particular customer can view that customer's information is well known in the art. Additionally, security to protect information contained on the server is well known to practitioners in the art. Step **1116** is followed by step **1118,** in which the customer financial institution determines if another bill packet needs to be processed for another customer. If another bill packet needs processing, the "YES" branch is followed to step **1104.** If another bill packet does not need processing, the "NO" branch is followed to "CONTINUE" step, in which the routine returns to routine **608** of FIG. 6.

FIG. 12 illustrates a settlement of an electronic bill payment routine **608.** Routine **608** follows routine **606** shown on FIG. 6. In step **1202,** the customer's financial institution receives a payment. Typically, payment will be in the form of authorizing the customer financial institution to debit the customer's direct deposit account or charge the credit card issued by the financial institution. Naturally, other forms of payment can be accepted. Step **1202** is followed by step **1204,** in which the customer financial institution determines if the customer direct deposit account should be debited. If the direct deposit account is not to be debited, the "NO" branch is followed to step **1206,** in which the customer's credit card is charged. Step **1206** is followed by step **1210,** in which the customer financial institution updates the customer payment warehouse database. The customer payment warehouse records the payment transaction. The database can be used by customer service if questions later develop concerning the payment of a particular bill.

If the direct deposit account is authorized to be debited, the "YES" branch of step **1204** is followed to step **1208,** in which the customer financial institution debits the customer's direct deposit account. Step **1208** is followed by step **1210,** in which the customer payment warehouse database is updated. Step **1210** is followed by step **1212,** in which the customer financial institution retrieves the biller's financial institution routing number and the billing account number. This information enables the customer financial institution to send an automated payment to the biller's financial institution. Step **1212** is followed by step **1214,** in which the customer financial institution send an automated payment to the biller's financial institution. The payment can be made over proprietary network such as SPECTRUM, a proprietary network developed by several large financial institutions for conducting electronic banking. Naturally, the payments can also be accomplished via the Internet using financial transaction standard such as OPEN FINANCIAL EXCHANGE (OFX) or INTERACTIVE FINANCIAL EXCHANGE (IFX). Those skilled in the art will appreciate that electronic funds transfer can be accomplished by a variety of methods.

Step **1214** is followed by step **1216,** in which the biller's financial institution receives the automated payment. The biller's financial institution credits the biller's direct deposit account. If the bill service provider is not the biller's financial institution, the customer financial institution informs the bill service provider of the payment. Step **1216** is followed by step **1218**, in which the bill service provider updates the bill warehouse database. The bill warehouse database records the payment to the billing entity. The bill warehouse can be used by customer service representatives to resolve future questions concerning the payment. Step **1218** is followed by step **1220,** in which the bill service provider sends remittance information to the billing entity. Upon notification of the collected payment, the billing entity can update their account receivables.

Step **1220** is followed by step **1222,** in which the customer financial institution determines if it has received another payment. If another payment has been received, the "YES" branch is followed to step **1204**. If another payment has not been received, the "NO" branch is followed to the "CONTINUE" step, in which the routine returns to step 610 of FIG. 6.

In view of the foregoing, it will be appreciated that the invention provides an improved bill presentment and payment system that provides a "push" system to present bills to customers. It should be understood that the foregoing relates only to the exemplary embodiments of the present invention, and that numerous changes may be made therein without departing from the spirit and scope of the invention as defined by the following claims. Accordingly, it is the claims set forth below, and not merely the foregoing illustration, which are intended to define the exclusive rights of the invention.

## Claims

1. A method for electronic bill presentation and payment, comprising the entity steps of:
obtaining a plurality of bill files, each bill file associated with a particular billing and a particular billing account maintained at a biller's financial institution, each bill file including a plurality of records, each record identifying a particular invoice account and a corresponding balance representing a financial obligation owed by a corresponding customer to the billing entity;
processing records in each bill file by:
obtaining a routing address associated with a customer's financial institution where the corresponding customer maintains an account;
obtaining customer account identification information identifying the corresponding customer's account at the customer's financial institution;
assembling a bill packet corresponding to the bill record, the bill packet including information from the corresponding bill record and the customer's account identification information; and
transmitting the bill packet to an electronic repository corresponding to the customer's financial institution using the associated routing address; and
processing the bill packets received by each electronic repository by:
sorting the received bill packets by customer's account information;
assembling a bill presentation file containing information from the received bill packets for each customer account; and
electronically presenting each bill presentation filed for viewing and electronic bill payment.

2. The method of claim 1, wherein the step of obtaining a routing address comprises the steps of:
obtaining a payment made by the customer remunerated to the billing entity;
data mining the payment to obtain customer's financial institution data that distinctly identifies the customer's financial institution; and
associating the customer's financial institution data with a routing address.

3. The method of claim 2, wherein the customer's financial institution data includes an American Bankers Association routing and transit number or wherein the customer's financial institution data includes an International Organisation for Standardisation issuer identification number or wherein the step of associating the customer's financial institution data with a routing address comprises the step of registering the customer's financial institution data with an Internet Domain Name Service.

4. The method of claim 1, wherein obtaining a routing address comprises the steps of:
associating the customer's financial institution with a globally unique identifier;
registering the globally unique identifier with an Internet Domain Name Service;
receiving an Internet Protocol address corresponding to the globally unique identifier that has been registered with the Internet Domain Name Service; and
loading information into a look-up table database that correlates the customer's financial institution with the Internet Protocol address.

5. The method of claim 1, wherein the step of assembling a bill packet further comprises the step of encrypting the bill packet and preferably wherein the step of processing the bill packets received by each electronic repository further comprises the step of decrypting the bill packet.

6. The method of claim 1, wherein the step of assembling a bill packet further comprises the step of attaching to the bill record a Universal Resource Locator of a server operated by the billing entity to enable the customer to find detailed billing information or wherein the step of electronically presenting each bill presentation file for viewing the electronic bill payment further comprises the steps of:
providing security for accessing the bill presentation file to ensure the privacy of any information displayed; and
providing security to ensure the confidentiality of any payment information received.

7. The method of claim 1, wherein the step of electronically presenting each bill presentation file for viewing and electronic bill payment includes receiving authorisation to debit a direct deposit account at the customer's financial institution, and preferably further comprising the step of debiting the customer's direct deposit account and preferably further comprising the step of charging the customer's credit card.

8. The method of claim 1, wherein the step of electronically presenting each bill presentation file for viewing and electronic bill payment includes authorisation to charge a credit card of the customer.

9. The method of claim 1, further comprising the step of recording the payment by the customer in a customer payment warehouse database or further comprising the steps of:
sending an automated payment to the biller's financial institution that originated the bill;
crediting the billing account owned by the biller at the biller's financial institution; and
notifying the billing entity that the bill has been paid or further comprising the step of recording the payment to billing entity in a bill payment warehouse database.

10. A method for electronic bill presentation and payment, comprising the steps of:
obtaining a plurality of bill files;
processing each bill file to assemble a customer bill packet;
transmitting the customer bill packet to an electronic repository corresponding to the customer's financial institution;
processing the customer bill packet to assemble a bill presentation file; and
electronically presenting a bill presentation file for viewing and electronic bill payment.

11. A system for electronic bill presentation and payment configured to perform the steps of:
obtaining a plurality of bill files, each bill file associated with a particular billing and a particular billing account maintained at a biller's financial institution, each bill file including a plurality of records, each record identifying a particular invoice account and a corresponding balance representing a financial obligation owed by a corresponding customer to the billing entity;
processing recordings in each bill file by:
obtaining a routing address associated with a customer's financial institution where the corresponding customer maintains an account;
obtaining customer account identification information identifying the corresponding customer's account at the customer's financial institution;
assembling a bill packet corresponding to the bill record, the bill packet including information from the corresponding bill record and the customer's account identification information; and
transmitting the bill packet to an electronic repository corresponding to the customer's financial institution using the associated routing address; and
processing the bill packets received by each electronic repository by:
sorting the received bill packets by customer's account information;
assembling a bill presentation file containing information from the received bill packets for each customer account; and
electronically presenting each bill presentation file for viewing and electronic bill payment.

12. A system for electronic bill presentation and payment, comprising the steps of:
obtaining a payment made by a customer remunerated to a billing entity;
data mining the payment to obtain customer's financial institution data that distinctly identifies a customer's financial institution;
associating the customer's financial institution data with a routing address; and
transmitting a bill packet to an electronic repository corresponding to the customer's financial institution using the associated routing address.

13. A system for electronic bill presentation and payment arranged to obtain a plurality of bill files;
process each bill file to assemble a customer bill packet;
transmit the customer bill packet to an electronic repository corresponding to the customer's financial institution;
process the customer bill packet to assemble a bill presentation file; and
electronically present the bill presentation file for viewing and electronic bill payment.

14. A computer program configured to implement a method as claimed in any of claims 1 to 10 or a system as claimed in any of claims 11 to 13.

15. A computer readable medium for storing a computer program as claimed in claim 13.

16. A server configured to implement a method as claimed in any of claims 1 to 10 or a system as claimed in any of claims 11 to 13.
